Europäisches Patentamt

European Patent Office

Office européen des brevets

(11) Veröffentlichungsnummer: **0 487 953 A1**

# EUROPÄISCHE PATENTANMELDUNG

(21) Anmeldenummer: **91118998.3**

(22) Anmeldetag: **07.11.91**

(51) Int. Cl.5: **E01F 9/00**, G08B 5/00

(30) Priorität: **17.11.90 DE 4036729**

(43) Veröffentlichungstag der Anmeldung:
**03.06.92 Patentblatt 92/23**

(84) Benannte Vertragsstaaten:
**AT BE CH DE DK FR GB LI NL SE**

(71) Anmelder: **FRAUNHOFER-GESELLSCHAFT ZUR FÖRDERUNG DER ANGEWANDTEN FORSCHUNG E.V.**
**Leonrodstrasse 54**
**W-8000 München 19(DE)**

(72) Erfinder: **Schmidt, Heribert, Dr.**
**Feldackerweg 4a**
**W-7830 Emmendingen 13(DE)**

(54) Verfahren zur Beheizung von Anzeigeelementen, Verkehrszeichen und -Spiegeln.

(57) Die Erfindung betrifft ein Verfahren und eine Einrichtung zur Verwendung von Erdwärme zur Erwärmung von Anzeigeelementen insbesondere Verkehrszeichen mittels eines Wärmerohres. Der Übergang der Wärme vom Wärmerohr zu dem Anzeigeelement kann geregelt werden. Die Erwärmung des Anzeigeelementes dient zur Beseitigung von Raureif, Eisbildung oder Taubildung.

Fig. 1

Die Erfindung bezieht sich auf ein Verfahren zur Beheizung von Anzeigeelementen, Verkehrszeichen und -Spiegeln und eine Einrichtung zur Durchführung des Verfahrens. Die Verwendung von Erdwärme ist bekannt, z.B. DE-OS 30 47 397, 38 33 405, 35 32 542.

Zumeist wird vorgeschlagen, die Erdwärme für Heizzwecke für Häuser zu verwenden, aus der DE-OS 35 32 542 ist die Verwendung für eine Heizung von Fahrbahnen bekannt.

Anzeigeelemente, insbesondere Verkehrszeichen, Verkehrsspiegel oder andere standortsfeste Anzeigeelemente, haben oft den Nachteil, daß durch Beschlagen von Tau oder gefrierender Nässe Eisbildung oder Schneeflug an der Anzeige oder am Abdeckglas stattfindet, was die Sicht auf die Anzeige verhindert.

An wichtigen Stellen werden deshalb derartige Verkehrzeichen beheizt, was nicht nur einen relativ hohen Stromverbrauch kostet, viel kostenintensiver ist die Verlegung von Stromleitungen an die betreffende Stelle.

Aufgabe der Erfindung ist es daher, derartige Anzeigeelemente beheizbar zu machen, aber ohne Verwendung von Strom aus dem öffentlichen Netz.

Dies geschieht erfindungsgemäß durch das Verfahren nach Anspruch 1 sowie eine entsprechende Einrichtung nach Anspruch 2. Vorteilhafte Ausgestaltungen der Erfindung sind in den Unteransprüchen gekennzeichnet.

Aus "Energie" von Fricke/Borst, Kapitel 9.7, Oldenburg-Verlag, 1984, die nur beispielhaft als Literaturstelle erwähnt ist, ist die Bauart von Wärmerohren bekannt. Das Beschlagen oder Vereisen von Verkehrszeichen ist außerordentlich gefährlich. Durch die Erfindung wird daher ein großer Nachteil beseitigt. Die Wärmerohre benötigen zur Funktion keinen Antrieb, nur die notwendige Temperaturdifferenz, die zwischen dem Erdreich und der Umgebungsluft fast immer vorliegt.

Falls das Erdreich relativ trocken ist, und damit der Wärmefluß in dem Medium relativ gering, empfiehlt es sich, für die Entnahme von Energie eine Regelung vorzusehen. Dabei kann gemäß den Ansprüchen 3ff der Transport der Wärme durch Schalter geregelt werden. Es ist aber nur ein Ab- oder Anschalten nötig, eine mengenmäßige Regelung ist nicht nötig. Die Tau- Reif- und Eisbildung tritt hauptsächlich in den Abendstunden bzw. bis zu den Morgenstunden auf, je nach Sonneneinstrahlung ist die Sichtbehinderung nach kurzer Zeit beseitigt. Es ist deshalb möglich, die Schaltung über eine Solarzelle zu koppeln, die bei Tagesanbruch schaltet, nämlich sobald das diffuse Tageslicht genügt, den Schalter zu betätigen. Vorteilhafterweise wird ein Magnetschalter betätigt, der seinerseits im Wärmerohr einen Schieber betätigt, der den Wärmetransport freigibt bzw. schließt.

Ebenfalls kann dies durch eine Uhr erfolgen, da natürlich auf eine genaue Anzeige verzichtet werden kann. Es muß nur sichergestellt werden, daß das Anzeigeelement vor Tagesanbruch beheizt wird. Auf diese Weise ist der Stromverbrauch für die Uhr außerordentlich gering, der Schalter selbst könnte beispielsweise über einen wiederaufladbaren Akku geschaltet werden.

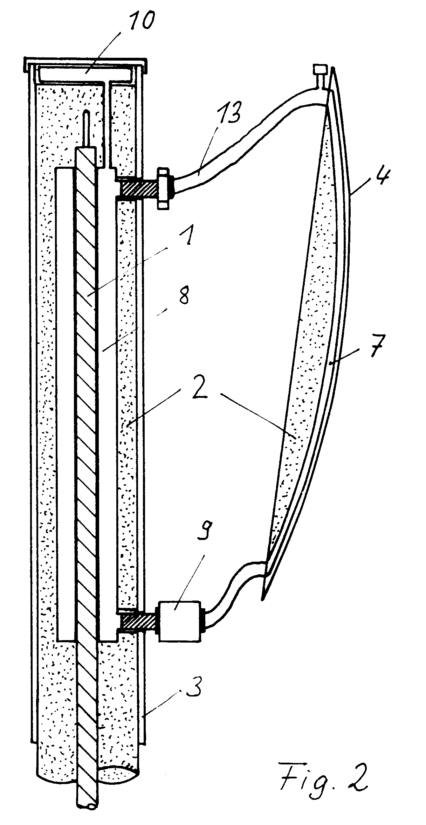

Die Unterbrechung des Wärmetransportes in dem Wärmerohr kann auch entsprechend der DE-OS 35 32 452 erfolgen, oder aber gem. Fig. 2 über ein Ventil, das den Wärmetransport zum Spiegel regelt.

Die Regelung des Wärmetransportes ist hauptsächlich dann notwendig, wenn, wie oben dargestellt, das Erdreich trocken ist oder der im Erdreich befindliche Wärmetauscher bzw. Wärmekollektor nicht besonders groß ausgeführt ist.

Falls dies nämlich der Fall ist, wird durch den sehr schnellen Wärmetransport des Wärmerohres erreicht, daß die Temperatur des Erdreichs die Temperatur des Anzeigeelementes bzw. der zu beheizenden Fläche, im allgemeinen die Außenfläche, annimmt.

Im folgenden wird die Erfindung anhand eines Ausführungsbeispiels, hier eines Verkehrsspiegels, sowie der Zeichnung erläutert.

An unübersichtlichen Straßenkreuzungen und -einmündungen werden Spiegel zur Beobachtung des Verkehrs eingesetzt, weiterhin zur allgemeinen Überwachung im Sicherheitsbereich. Diese Spiegel beschlagen bekanntlich bei bestimmten Witterungsbedingungen, wodurch ein erhebliches Gefahrenpotential entsteht.

An neuralgischen Einsatzorten werden zur Vermeidung des Beschlagens elektrisch beheizte Spiegel eingesetzt, welche typischerweise aus dem 220V-Netz gespeist werden. Eine einfache thermostatische Zweipunktregelung aktiviert diesen Flächenheizer beim Unterschreiten einer (einstellbaren) Lufttemperatur von - 10 ... + 40°C.

Dieses Konzept hat den Nachteil, daß
a) der Anschluß an das öffentliche Netz i.a. aufwendig, wenn nicht unmöglich ist,
b) der Leistungsbedarf von ca. 100W/m2 Spiegelfläche in Verbindung mit der einfachen Thermostatsteuerung zu einem erheblichen Energiebedarf führt.

Die Erfindung schafft die Möglichkeit, die zur Erwärmung des Spiegels erforderliche Energie mittels eines Wärmerohres (Heatpipe) aus dem Erdreich zu entnehmen. Das Beschlagen der Spiegel über längere Zeitspannen tritt überwiegend in der kalten Jahreszeit auf. Hierbei liegen die Außen- und Spiegeltemperaturen zumeist unterhalb der mittleren Erdtemperatur von ca. 8 ... 10°C in 2 m Tiefe, so daß die Voraussetzungen für die Funktion eines Wärmerohres gegeben sind (siehe z.B.

Fricke/Borst "Energie", Kap. 9.7, Oldenburg-Verlag, 1984).

Bei geeigneter Ausführung des Wärmerohres stellt sich ein Wärmestrom so ein, daß die Temperatur am oberen Ende des Wärmerohres (Spiegel) nur wenige K unterhalb derjenigen am unteren Ende (Erdreich) liegt. Ein Beschlagen des Spiegelswird durch diese gegenüber der Umgebungstemperatur erhöhten Temperatur sicher verhindert. Der umgekehrte Effekt, daß der Spiegel bei Lufttemperaturen oberhalb der Erdtemperatur gekühlt wird, ist durch die Diodenwirkung des Wärmerohres unterbunden.

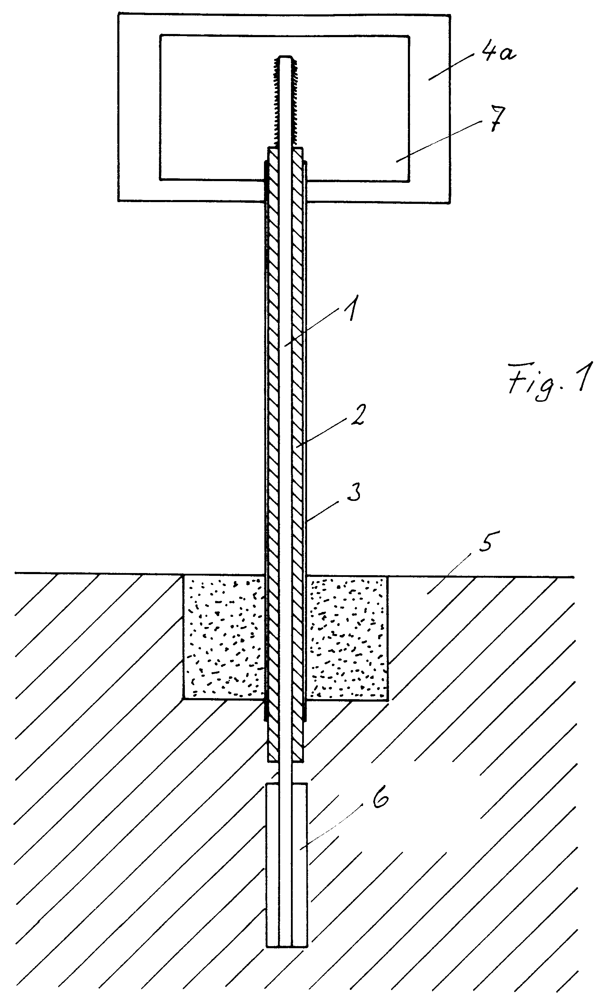

Ein Beispiel für eine praktische Ausführung zeigt Figur 1. Das Wärmerohr 1 mit einer Gesamtlänge von ca. 4 m und einem Durchmesser von etwa 25 mm ist mit einer Isolation 2 versehen und wird durch das Aufständerungsrohr 3 des Spiegels 4 geführt. Zur Verbesserung des Wärmeüberganges vom Erdreich 5 auf die Verdampferzone kann der untere Bereich mit einem z.B. rippenförmig ausgeführten Kollektor 6 ausgestattet sein. Auf der Spiegelrückseite 4a wird der Wärmestrom über einen Wärmeleiter 7 (z.B. Kupferplatte) großflächig dem Spiegel zugeführt. Weiterhin empfiehlt es sich, die Wärmeleiter der Anzeigenelemente selbst an der Rückseite mit Dämmstoffen 2, wie z.B. Styropor, zu isolieren, um den Wärmebedarf zu verringern. Die Anzeigeelemente, z.B. Verkehrsschilder, können auch direkt auf den Wärmeleiter aufgebracht sein, z.B. als Folie. Das Wärmerohr kann im oberen Bereich abschnittsweise als biegsames Wellrohr ausgeführt sein, um die in den meisten Fällen erforderliche individuelle Neigung des Spiegels zu ermöglichen.

Fig. 2 zeigt eine einfache Regelung des Wärmetransports. Der obere Teil des Wärmerohres 1 ist mit einem Wärmetauscher 8 umhüllt. Vom oberen Ende des Wärmetauschers geht ein isolierter Schlauch 13 zur Spiegelrückseite 4a. Das Fluid im Wärmetauscher gelangt dort über einen zweiten Wärmetauscher 7 in Verbindung mit dem Spiegel 4. Der Auslaß des Wärmetauschers 7 ist über ein Ventil 9 mit dem unteren Einlaß des Wärmetauschers 8 verbunden. Der Wärmetransport geschieht hierbei durch die natürliche Konvektion. Es kann aber auch das Ventil durch eine Pumpe ersetzt werden, so daß die Pumpe bei Bedarf an Heizung für den Spiegel eingeschaltet werden kann. Vorteilhafterweise befindet sich bei dem Wärmetauscher noch ein Ausdehnungsgefäß 10, vorzugsweise im isolierten Gehäuse des Ständerrohres 3. An dem höchst gelegenen Ort der Anordnung ist ein Entlüftungsventil angeordnet.

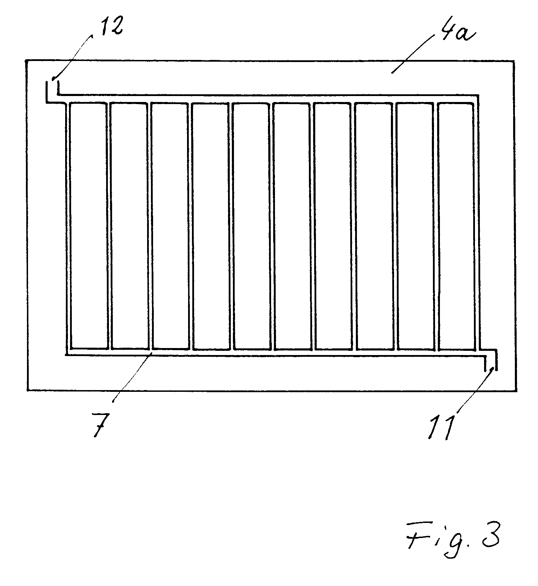

Fig. 3 zeigt dann noch die Anordnung des Wärmetauschers 7 bzw. Wärmeleiters auf der Rückseite des Spiegels 4a mit dem oben gelegenen Warmwassereinlaß 12 und dem Kaltwasserauslaß 11.

Das Fluid in dem Wärmetauscher kann vorteilhafterweise Wasser mit einem Glykolgemisch sein. Bei der Anordnung nach Fig. 1 ist es besonders vorteilhaft, daß die Heatpipe als homogenes gerades Rohr ausgeführt werden kann und daher sehr preiswert ist. Eine gleichmäßige bzw. gewollte Verteilung der Heizenergie auf die Spiegelrückseite ist mittels eines hier aufgebrachten Rohrsystems leicht möglich.

Ökonomische und ökologische Beurteilung: Die Herstellungskosten eines Wärmerohres in der oben beschriebenen Art liegen bei einer Serienfertigung deutlich unter DM 200,-- und bewegen sich somit etwa in der Größenordnung der konventionellen Lösung mit Flächenheizer und Thermostatsteuerung.

Die Lebensdauer eines Wärmerohres ist prinzipiell unbegrenzt und es entstehen keine weiteren Betriebskosten.

Bei der herkömmlichen Lösung mit Netzanschluß entstehen bei der Installation durchschnittlich Anschlußkosten von etwa DM 2500,-- pro Meter Entfernung zum öffentlichen Netz.

Bei einer Einstellung des Thermostatreglers auf eine Außentemperatur von + 10°C kann von einer jährlichen Heizdauer von etwa 3500 Stunden ausgegangen werden. Dies führt bei einer Heizleistung von 100 Watt und einem Energiepreis von 0,20 DM/kWh zu Gesamtenergiekosten von ca. DM 70,--/Jahr. Der Einsatz eines Wärmerohres ist also bei Voraussetzung geeigneter örtlicher Gegebenheiten ökonomisch sinnvoll.

Beim Bau des Wärmerohres werden als Werkstoff rostfreier Stahl und als Füllung geringe Mengen Ammoniak verwendet, so daß seine Verwendung auch unter ökologischen Aspekten unbedenklich ist.

**Patentansprüche**

1.    Verfahren zur Beheizung von Anzeigeelementen, Verkehrszeichen und -Spiegeln,

     **dadurch gekennzeichnet,**

     daß Erdwärme mittels eines Wärmerohres zur Anzeigefläche geleitet wird, wobei der Wärmefluß geregelt wird.

2.    Einrichtung zur Durchführung des Verfahrens nach Anspruch 1,

     **dadurch gekennzeichnet,**

     daß ein Wärmerohr 1 vorgesehen ist, das mit einem Wärmetauscher 7 hinter dem Anzeigeelement, Verkehrszeichen oder -Spiegel in Verbindung steht und Einrichtungen zur Regelung des Wärmeflusses vorgesehen sind.

3. Einrichtung nach den Ansprüchen 1 - 2,

   **dadurch gekennzeichnet,**

   daß der Wärmefluß durch einen Tempertursensor regelbar ist.

4. Einrichtung nach Anspruch 3,

   **dadurch gekennzeichnet,**

   daß der Schalter ein Magnetschalter ist, der im Wärmerohr ein Absperrventil betätigt.

5. Einrichtung nach den Ansprüchen 3 - 4,

   **dadurch gekennzeichnet,**

   daß die Schaltung durch eine Solarzelle mit Energie beaufschlagt wird und geregelt wird.

6. Einrichtung nach den Ansprüchen 1 - 5,

   **dadurch gekennzeichnet,**

   daß die Schaltung durch eine Uhr gesteuert wird.

7. Einrichtung nach den Ansprüchen 1 - 3

   **dadurch gekennzeichnet,**

   daß eine Anordnung (7,8,9,13) zur geregelten Übertragung der Wärme vom Wärmerohr auf die Anzeigevorrichtung vorgesehen ist.

Fig. 1

Fig. 2

Fig. 3

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | PATENT ABSTRACTS OF JAPAN vol. 14, no. 159 (M-956)(4102) 28. März 1990 & JP-A-2 020 710 ( FUJIKURA LTD ) 24. Januar 1990 * Zusammenfassung * --- | 1 | E01F9/00 G08B5/00 |
| D,A | DE-A-3 833 405 (KRÜSS) * Spalte 2, Zeile 5 - Zeile 9; Ansprüche * --- | 1 | |
| D,A | DE-A-3 532 542 (DAIMLER-BENZ AG) * Ansprüche * --- | 1 | |
| A | FR-A-1 568 141 (J. HUBER ING. BELEUCHTUNGS-& METALLBAU) * das ganze Dokument * --- | 1 | |
| A | DE-A-2 325 015 (HÄNEL ET AL.) * Seite 1 - Seite 2 * --- | 1 | |
| A | DE-U-7 039 335 (SEIFERT) * Seite 2 * ----- | 1 | RECHERCHIERTE SACHGEBIETE (Int. Cl.5) E01F G08B E01C |

Der vorliegende Recherchenbericht wurde für alle Patentansprüche erstellt

| Recherchenort | Abschlußdatum der Recherche | Prüfer |
|---|---|---|
| BERLIN | 25 MAERZ 1992 | PAETZEL H. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument